# FASCICULE DE BREVET EUROPEEN

(11) **EP 1 215 182 B1**
(45) Date de publication et mention de la délivrance du brevet: **09.05.2007**
(21) Numéro de dépôt: 01000753.2
(22) Date de dépôt: 13.12.2001
(51) Int. Cl.: C04B 33/13, C04B 18/10

(54) **Céramique à base de mâchefers d'incinération d'ordures ménagères**
Keramik hergestellt mit Schlacken von Hausmüllverbrennungsanlagen
Ceramic based on household waste incineration slag

(30) Priorité: 13.12.2000 FR 0016267
(43) Date de publication de la demande: 19.06.2002
(73) Titulaire: ECO Conception Conseil, 94437 Chennevières sur Marne (FR)
(72) Inventeur: BASUYAU, Vincent, 77590, CHARTRETTE (FR)
(74) Mandataire: Schmit, Christian Norbert Marie

(56) Documents cités:
- EP-A- 0 376 690
- FR-A- 2 759 614
- US-A- 5 830 251
- PATENT ABSTRACTS OF JAPAN vol. 1998, no. 14, 31 décembre 1998 (1998-12-31) -& JP 10 231166 A (TOKYO YOGYO CO LTD), 2 septembre 1998 (1998-09-02)
- DATABASE WPI Section Ch, Week 198315 Derwent Publications Ltd., London, GB; Class L02, AN 1983-35514K XP002195489 & JP 58 036969 A (KAKEHI K), 4 mars 1983 (1983-03-04)
- PATENT ABSTRACTS OF JAPAN vol. 1998, no. 05, 30 avril 1998 (1998-04-30) -& JP 10 001357 A (TOKYO YOGYO CO LTD;KYOWA SEITO KK), 6 janvier 1998 (1998-01-06)
- PATENT ABSTRACTS OF JAPAN vol. 1995, no. 03, 28 avril 1995 (1995-04-28) -& JP 06 339672 A (FUJIMI CERAMIC KK), 13 décembre 1994 (1994-12-13)
- PATENT ABSTRACTS OF JAPAN vol. 1995, no. 10, 30 novembre 1995 (1995-11-30) -& JP 07 172900 A (KAWASAKI REFRACT CO LTD;OTHERS: 01), 11 juillet 1995 (1995-07-11)
- PATENT ABSTRACTS OF JAPAN vol. 1998, no. 09, 31 juillet 1998 (1998-07-31) -& JP 10 095658 A (TOKYO YOGYO CO LTD;KYOWA SEITO KK; MARUTOSHI TORYO:KK), 14 avril 1998 (1998-04-14)

## Description

La présente invention a pour objet un matériau cristallisé à base de mâchefers. Elle trouve plus particulièrement son utilisation dans le domaine des matériaux cristallisés du type céramique, notamment pour une utilisation à titre de carrelage. Dans l'état de la technique, comme matériau cristallisé, on connaît principalement des céramiques réalisées à partir d'un mélange de matières premières minérales comportant par exemple de l'argile et du feldspath, ce mélange étant transformé à la suite d'un traitement thermique de manière à former les carreaux. L'intérêt de l'invention est qu'elle propose d'incorporer des composants de moindre coût, tels que du mâchefer, dans les mélanges servant de base pour la céramique.

Dans l'état de la technique, on connaît, pour obtenir une céramique, et plus particulièrement des carreaux de céramique, un mélange de minéraux, ces minéraux étant de préférence des matériaux inorganiques non métalliques, cuits à une température de 1200 °C. Pour la fabrication plus particulière des carreaux de grès, le mélange initial, avant cuisson, comprends principalement du feldspath, de l'argile et éventuellement d'autres minéraux comme de la pegmatite. Le feldspath est, en France par exemple, extrait dans les Pyrénées. Une composition classique d'un mélange servant pour la fabrication de céramique et plus particulièrement de grès comporte une fraction de feldspath de 50%, une fraction d'argile de 30% et une fraction de pegmatite de 20%. Pour l'obtention d'un carrelage, il est nécessaire que le rapport entre silicate et aluminate (SiO2/ Al2O3) du mélange initial soit élevé, sinon on obtient un matériau réfractaire à la place du carrelage.

Pour obtenir un carreau de céramique, on rassemble d'abord les matières premières dans un broyeur. Elles y sont préalablement broyées de manière à ce qu'une taille des particules de ce mélange soit de l'ordre du millimètre voir du micromètre. Ensuite, ce mélange est humidifié de manière à obtenir une suspension homogène de minéraux dans l'eau. Puis, cette suspension est transformée en poudre dont l'humidité est contrôlée. Cette poudre est ensuite pressée, préférentiellement dans des moules pour l'obtention des carreaux. Les moules remplis sont alors soumis à un processus thermique de cuisson. La cuisson est préférentiellement réalisée par étapes : une première étape d'échauffement, une deuxième étape de stabilisation et une troisième étape de refroidissement. Pour l'obtention de carreaux de grès, un cycle classique de cuisson comporte une étape de stabilisation à 1200°. Par ailleurs, le temps de cuisson classique d'un carreau degré est de 2 heures.

La fabrication de carreaux de grès pose un problème. En effet, l'incorporation nécessaire dans le mélange initial de minéraux de feldspath coûte cher lors de la fabrication. En effet, le feldspath est une matière première intrinsèquement chère, et également chère du fait de son coût de transport entre des lieux où il est extrait et des lieux où il est utilisé. En effet, en France on trouve plus particulièrement le feldspath dans les Pyrénées, ou dans le Morvan au centre de la France, alors que la production et la fabrication de carreaux de grès est plutôt réalisée dans le Nord Est, soit à plus de 1000 km.

De plus, étant données les caractéristiques physiques et chimiques des différents minéraux du mélange de base, il est nécessaire de chauffer ce mélange à une température de 1200° pour pouvoir obtenir un carreau qui ait les qualités requises au niveau rigidité et également aspect extérieur (couleur, brillance). Il n'est pas possible de diminuer cette température de cuisson, car sinon les carreaux ne sont alors pas suffisamment cuits et sont fragiles. Cette température de 1200° est imposée par le fait que le feldspath ne fond pas en dessous de cette température. Or la fusion du feldspath est nécessaire à la vitrification des carreaux, et plus particulièrement à leur grésage. En dessous de cette température, l'objet façonné en forme de carreau, ne se solidifie pas. La réduction des coûts énergétiques de fabrication des carreaux n'est donc pas possible.

Dans l'état de la technique, on de connaît de l'enseignement du document JP-A-10 001357, un procédé pour former des tuiles, ou des carreaux, en mélangeant une fraction de mâchefers à des matières minérales. Ce mélange est broyé et mélangé à de l'eau pour former des blocs destinés à être compressés avant d'être cuits pour prendre alors leur forme définitive. Mais ce procédé pose un problème de qualité visuelle des carreaux obtenus après cuisson quand ceux ci présentent des piqûres de couleurs ou des irrégularités de planéité.

Dans l'état de la technique, on connaît également de l'enseignement d'un autre document EP-A1-0 376 690, un procédé de fabrication de carreaux de céramique à base de mâchefers d'incinération d'ordures ménagères et d'argile. Ce procédé fait intervenir une étape de cuisson à 1150°C. Cependant, il peut arriver que les carreaux ainsi obtenus présentent également des irrégularités de surface ne correspondant à la qualité recherchée pour l'obtention de telles céramiques.

L'invention a pour objet de résoudre les problèmes posés dans l'état de la technique. En effet, les céramiques selon l'invention comportent moins de minéraux chers que les céramiques de l'état de la technique. En effet, on remplace notamment en toute ou partie la fraction de feldspath par une fraction de mâchefer. Ainsi on diminue les coûts en terme de matières premières. Mais aussi la présence de mâchefer dans le mélange permet de réduire le temps de cuisson, et aussi d'abaisser la température de cuisson. Ainsi des économies d'énergie sont réalisées. Dans un exemple préféré, on choisit un mâchefer d'incinération d'ordures ménagères pour réaliser de telles céramiques.

De plus, les carreaux réalisés à partir de mâchefer présentent une meilleure résistance mécanique et une meilleure tenue au gel.

La température de fusion du mâchefer est nettement inférieure à celle du feldspath. Donc en gardant les mêmes procédés de fabrication que pour les carreaux de grès classique, le moulage et la cuisson d'un mélange selon l'invention ne permet pas d'aboutir à un résultat conforme aux attentes qualitatives imposées. En effet, on obtient une masse informe due au fait que le mélange devient liquide à la cuisson et ne respecte plus les contours du moule.

D'autre part, la céramique est normalement constituée à partir de matériaux inorganiques non métalliques. Or, contrairement aux caractéristiques de la céramique, le mâchefer, et plus particulièrement le mâchefer d'incinération d'ordures ménagères, comporte des résidus organiques et des résidus métalliques. Cependant une céramique selon l'invention, peut néanmoins être obtenue, en adaptant le procédé de cuisson à la spécificité du mâchefer. A cet effet, le procédé de cuisson prévoit une phase d'échauffement progressive. La température de cuisson est moins élevée, mais permet néanmoins d'éliminer les particules organiques par fusion. Cette adaptation à la spécificité du mâchefer présente de plus l'avantage de permettre une réduction du coût de cuisson, car elle aboutit à une diminution de la température pallier de cuisson à une température de 1150° à 1180° Celsius.

La présente invention ayant pour objet l'introduction de mâchefer dans la composition de la céramique, elle présente le double avantage d'une part de permettre une réduction de coûts des matières premières utilisées pour le mélange de base de la céramique, et d'autre part une réduction des coûts de procédé de fabrication des carreaux de céramique.

L'invention a pour objet un procédé d'obtention d'une céramique
- on broie des matières premières minérales, préférentiellement des mâchefers d'incinération d'ordures ménagères ;
- on tamise ce mélange ;
- on ajoute de l'eau pour former une barbotine ;
- on transforme la barbotine en granulés ;
- on presse des granulés dans un moule pour former un tesson ;
- on cuit le tesson,
caractérisé en ce que la cuisson du tesson comporte une phase d'échauffement progressive pour permettre le dégagement gazeux des composants fusibles du tesson.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figure 1 : une vue d'échantillons de mâchefers chauffés à différentes températures ;
- Figure 2 : une vue de six carreaux de céramique selon l'invention après cuisson ;
- Figure 3 : un graphique représentant des cycles de cuisson en fonction du temps d'une céramique selon l'invention.

Un mélange de base d'une céramique selon l'invention comporte une fraction de mâchefer. La figure 1 présente un mâchefer 1 chauffé à différentes températures de cuisson. Le résultat de ces cuissons différentielles est présenté dans une éprouvette graduée 2, de manière à faire apparaître visuellement la température de fusion de ce mâchefer 1.

Le mâchefer préférentiellement utilisé dans le mélange de base d'une céramique selon l'invention est un mâchefer d'incinération d'ordures ménagères. Ce mâchefer est de préférence criblé de telle sorte que seules des particules ayant un diamètre compris entre 0 et 10 mm sont sélectionnées pour intervenir dans les mélanges de base. Dans une variante, on peut également utiliser une fraction comportant des particules encore plus fines, d'un calibre 0 à 8 mm de diamètre, ou bien encore des particules d'un calibre de 0 à 6 mm de diamètre par exemple. Le diamètre des particules du mâchefer utilisé dans le mélange de base est fondamental vis-à-vis de la rhéologie du mélange obtenu par la suite. Or la rhéologie du mélange de base est un critère important et déterminant des caractéristiques de la céramique obtenue après cuisson. En général, pour réaliser une céramique selon l'invention, on choisit la fraction de particules les plus fines du mâchefer. Cette fraction pouvant être sélectionnée de manière plus ou moins large.

Dans un exemple préféré, le mâchefer criblé, utilisé pour l'obtention de céramique selon l'invention correspond à un mâchefer de type EC2, caractérisé par un rapport entre silicate et aluminate tricalcique élevé, par exemple avec un taux de silicate de 34 % et taux d'aluminate de 8 %. D'autre part ce mâchefer 1 est caractérisé par la présence d'oxydes fondants tels que le magnétite, la ferrite, la calcite, le potassium, le cuivre, le soufre, le plomb et le zinc. Globalement ce mâchefer comporte environ 8% d'alcalins et 20% d'alcalino-terreux. Il contient également du quartz, de la fayalite et de la chaux vive. Une telle composition conduit à une vitrification précoce et éventuellement brutale du mâchefer, comme il peut être observé sur la figure 1. On observe en effet un passage net des granulés de mâchefer d'un stade solide à un stade vitrifié pour une température comprise entre 1130 et 1168°C. A la température de 1130°, on observe un début de grésage, à 1140° une couleur marron, et à 1168°C on observe la fusion, et pour des températures supérieures on obtient une couleur noire de carbonisation. Le mâchefer est, comme le feldspath un matériau fondant. Mais, la température de fusion du feldspath, se situe plus précisément entre 1200 et 1250°. En effet, le rapport entre silicate et aluminate tricalcique est moins élevé au sein d'un feldspath avec par exemple une proportion de silicate de 70% et une proportion d'aluminate de 20%.

Dans une variante pour réaliser un mélange permettant l'obtention d'un carreau de céramique, on mélange préférentiellement de l'argile avec de la pegmatite et du mâchefer et/ou un autre fondant tel que le feldspath. Dans ce cas, les proportions respectives du mélange sont par exemple 30% d'argile, 20% de pegmatite et 50% de matériaux fondants tel que feldspath ou mâchefer. Pour l'obtention d'un carreau du grès classique, la fraction de 50% de matériaux fondants est entièrement constituée de feldspath.

Pour obtenir un carreau de céramique selon l'invention, la fraction de 50% de matériaux fondants est composée d'une fraction de mâchefer et éventuellement d'une fraction de feldspath. En effet, dans un premier mode de réalisation, les 50% de feldspath sont remplacés par 50% de mâchefers. Dans un deuxième mode de réalisation, on peut envisager une proportion de feldspath de 35 à 45% avec une présence de mâchefer de 5 à 15%, à titre de dopant, de telle sorte que le cumul des fractions de mâchefer et de feldspath représentent environ 50% du mélange de base. Dans ce deuxième mode de réalisation, la fraction de mâchefer est inférieure à 30%.

Dans un exemple préféré, on choisit de préférence un mâchefer épuré ayant fait l'objet d'un crible préalable. Le crible préalable ayant pour but d'éliminer au maximum les particules métalliques pouvant être à l'origine de dégazages pendant la cuisson. Par ailleurs ce crible peut également correspondre à une sélection des particules les plus fines du mâchefer.

Pour réaliser un carreau de grès à partir d'un mélange de base, on rassemble dans un premier temps les matières premières dans une barbotine. Généralement, on réalise préalablement un broyage à sec permettant l'obtention des particules d'un calibre de 50 microns minimum. Le broyage peut être réalisé sur le mélange de base ou sur ses différentes fractions de manière séparée. Le broyage du mâchefer est préférentiellement réalisé avec des galets de Dieppe dans l'eau d'un tambour. Ce broyage dure 10 à 15 heures. Le mâchefer comporte des éléments métalliques, et ceux ci ne peuvent pas être réduits en taille au cours de broyage, même si l'étape de ce broyage durait plus longtemps. En effet, la nature plastique de ces éléments métalliques ne permet pas leur réduction de taille, mais contribue seulement à leur déformation. Le mâchefer étant de préférence criblé avant son incorporation dans le mélange de base, la présence des éléments métalliques contribue à augmenter la quantité de particules, du mâchefer ou du mélange de base, refusées sur le tamis de criblage. Par ailleurs, on peut également envisager que ces particules métalliques soient préalablement éliminées par une épuration magnétique.

De plus, un broyage plus fin encore peut être prévu. Par exemple ce broyage plus fin peut être un broyage Asling, qui correspond à un tamisage dans le but de ne garder que les particules inférieures à 125 microns de diamètre. Ce second broyage peut avoir une durée de 1 à 3 heures, il correspond au tamisage. On rajoute un dispersant dans la suspension de particules broyées et d'eau issues de la barbotine, afin de l'homogénéiser. Le dispersant peut être du tripolyphosphate de soude. La proportion de dispersant incorporé à la suspension est de 0,5 à 5 pour mille. Par ailleurs la densité en grammes par litre obtenue pour cette suspension est comprise entre 1000 et 2000 grammes par litre, la densité des suspensions selon l'invention étant généralement plus faible que la densité des suspensions classiques. Toutefois cette suspension reste très visqueuse.

Ensuite, la suspension fait l'objet d'un séchage partiel pour atteindre une teneur en eau de 10%. La suspension peut alors être stockée en l'état ou alors transformée en granulés. Pour réaliser la granulation de cette suspension très visqueuse, on utilise par exemple un atomiseur. L'atomiseur permet d'obtenir des particules ou granulés ayant un diamètre de 250 à 500 microns. On obtient par ce procédé des granulés dont l'humidité est de 6 à 7%. En effet, les granulés sont ensuite séchés de manière à atteindre tous de manière homogène environ 6% d'humidité. A la sortie de l'atomiseur, les granulés peuvent subir une dessiccation rapide dans une enceinte à 500°C. Les granulés ou microbilles sont alors caractérisées par une surface extérieure « grillée », alors que le coeur est encore humide. Généralement, les granulés ainsi obtenus sont ensuite stockés. Le stockage permet d'homogénéiser la teneur en eau des granulés. Mais le stockage permet surtout de stocker les différentes masses produites, en fonction des couleurs des granulés, car préférentiellement l'atomiseur fonctionne par campagne et donc de façon intermittente.

Ensuite, à partir des granulés, on peut préparer des tessons servant à la préparation des carreaux. En effet, un tesson constitue un tas de granulés pressés et disposés dans un moule. La presse permet d'aboutir à une diminution d'encombrement des granulés dans le moule.

Dans une variante, le tesson est préférentiellement formé de plusieurs couches de granulés pressés les unes contre les autres dans le moule par l'intermédiaire de la presse,. Dans une variante, pour former le tesson sur la hauteur totale du moule, on peut rajouter des granulés sur la couche des granulés pressés, et effectuer à nouveau une opération de presse de la nouvelle couche de granules disposés sur la couche de granulés déjà pressés. Ainsi on obtient deux couches de granulés pressés l'une au-dessus de l'autre. On peut réitérer l'opération jusqu'à ce que le moule du tesson soit complètement remplie et compressé.

Généralement le tesson contenu dans le moule est obtenu au cours d'une seule presse. A cet effet, on utilise préférentiellement une presse pouvant presser des granulés avec une force supérieure ou égale à 25 méga-pascals. Pour la fabrication de carreaux, les tessons sont pressés à 25 MPa, alors que pour l'obtention de grès cérame, les tessons sont pressés à 40 MPa pour diminuer la porosité. Cette pression permet d'assurer la cohésion temporaire des tessons notamment lorsqu'ils doivent circuler sur des circuits d'émaillage et d'enfournement.

Lorsque la forme géométrique de la céramique à obtenir est complexe, on utilise préférentiellement la technique du coulage qui ne met pas de presse en oeuvre. Dans une variante, une suspension selon l'invention contenant entre autre du mâchefer peut être coulée pour obtenir une forme particulière.

Ensuite les tessons peuvent être séchés ou éventuellement recouverts d'un émail. L'émail correspond à une suspension aqueuse de minéraux et d'adjuvants pulvérisés sur au moins une face du tesson. L'émaillage des carreaux est un mode préféré de réalisation. Ensuite, le tesson éventuellement recouvert d'émail est amené dans un four. Par exemple il peut être placé dans un four à gaz. La cuisson a lieu par étapes. Une première étape consiste à un échauffement du tesson, une deuxième étape dite pallier constitue une phase de cuisson propre et ensuite une face de refroidissement pour amener le carreau formé à température ambiante sans que celui-ci ne ce casse.

Lors de l'étape d'échauffement, le tesson est placé progressivement d'une température ambiante à une température de 1150° à 1180°. Au fur et à mesure que le tesson cuit, toutes les impuretés colorantes disparaissent, les composants organiques se brûlent et les gaz s'échappent du tesson. Cet échauffement ne doit pas être trop rapide, sinon l'intégralité des gaz n'a pas le temps de s'échapper du tesson alors que l'émail se forme déjà. L'émail formé empêche la sortie des gaz et on observe alors des irrégularités à la surface de l'émail. Par exemple, l'échauffement peut avoir une durée d'environ 40 minutes, suivi d'un pallier de 10 minutes et suivi d'un refroidissement de 30 minutes.

La Figure 2 présente des carreaux obtenus à partir d'une suspension selon l'invention réalisée dans cet exemple à partir de 50% de mâchefers, et en absence de feldspath. Une première colonne 3 correspond aux carreaux obtenus alors que le tesson était initialement recouvert d'émail. La colonne 4 représente trois carreaux après cuisson alors que le tesson initial n'était pas émaillé. La figure 2 montre en tout 6 carreaux obtenus après cuisson, les 6 carreaux sont répartis selon les deux colonnes 3 et 4 et selon trois lignes 5, 6 et 7 correspondant chacune à un cycle de cuisson différent. La ligne 5 correspond à un cycle de cuisson ayant pour pallier 1200°, la ligne 6 correspond à des carreaux ayant été chauffés avec une température pallier de 1120°, et la ligne 7 correspond à des carreaux ayant été cuits à une température de 1150°. Les cycles de cuissons des différents carreaux sont présentés figure 3.

La figure 3 présente 3 cycles de cuisson. Un premier cycle de cuisson 8 comporte une phase d'échauffement d'une durée de 60 minutes montant jusqu'à une température de 1200°, température à laquelle un pallier de 20 minutes est réalisé, pour être suivi ensuite d'un refroidissement d'une durée de 60 minutes. Le cycle de cuisson est donc d'une durée de 2 heures et 20 minutes. On observe que les carreaux 9 et 10 présentés sur la ligne 5, n'ont pas de formes propres. En effet, il s'agit des formes ne respectant pas la forme stricte d'un moule d'un carreau généralement rectangulaire. En effet à 1200°, le mélange selon l'invention a complètement fondu et a perdu ses caractéristiques intrinsèques.

La température de 1200° apparaît alors comme non fonctionnelle pour un mélange comportant 50% de mâchefers. Par ailleurs, la figure 3 présente un deuxième cycle de cuisson 11 comportant une montée à la température de 1120° en 40 minutes, suivie d'un pallier une durée de 8 minutes à cette température de 1120° et suivi d'un refroidissement brusque d'une durée de 45 minutes. Les carreaux 12 et 13 de la ligne 6 ayant subis ce cycle de cuisson présentent des irrégularités. En effet, pour qu'un carreau soit reconnu comme correct, il est nécessaire que le résultat de contrôles effectués sur ces carreaux après cuisson soit positif. Les contrôles comportent notamment une étude de l'émail pour son aspect général (piqûre, défaut), sa brillance à une incidence de 60°, sa couleur par la technique L*A*B, et également la qualité mécanique de rétention de l'émail sur le tesson. De plus, le contrôle comporte une étude du tesson, le tesson étant la couche principale du carrelage. Ce contrôle vise notamment la texture du tesson, sa couleur et sa résistance mécanique à la flexion dilatation.

Sur la figure 2, on observe clairement que le carreau 13, non émaillé, est d'une couleur très foncée. Or un carreau correct doit être clair. Il s'agit donc d'une irrégularité majeure. Par ailleurs, le carreau 12, présente lui des déformations de surface correspondant à des bulles 14 plus ou moins grosses. Les bulles 14 correspondent à un défaut de l'aspect général de l'émail qui est inacceptable. La présence de ces bulles s'explique par un chauffage trop rapide du tesson et donc à la formation trop rapide de l'émail imperméable au-dessus du tesson. Or le tesson comportant des minéraux fusibles et pouvant dégager des gaz, ces gaz se sont retrouvés emprisonnés entre le tesson et l'émail lors de ce cycle de cuisson.

Dans une variante, on prévoit d'appliquer une couche d'engobe entre le tesson et la couche d'émail pour justement absorber les dégagements gazeux tardifs ayant lieu après que la couche d'émail ait été formée. La couche d'engobe permet aussi de masquer la couleur, et de réduire la rugosité de surface du tesson avant l'application de l'émail.

La figure 3 présente un troisième cycle de cuisson 15 ayant une montée lente en température entre 800° et 1150°, voire jusqu'à 1180°. En effet, il s'écoule 1 heure 15 avant que le tesson soit placé à la température pallier de 1150°. Ensuite, le refroidissement est d'une durée de 45 minutes. Les carreaux obtenus sont quasiment conformes, excepté la présence de piqûres de couleur verte sur les carreaux émaillés dus à des dégagement de cuivre. Par contre les carreaux non émaillés ont toujours une couleur très foncée qui ne correspond pas au critère attendu.

De ce fait une température de cuisson préférentielle d'un tesson selon l'invention est située autour de 1150°C, soit comprise entre 1120°C et 1180°C.

Un mode de réalisation préféré de l'invention consiste à intégrer une portion de 5 à 10% de mâchefers avec 40 à 45% de feldspath dans la composition de céramique, et de réaliser un chauffage progressif dans la phase d'échauffement de manière à permettre le dégagement maximum de tous les composants fusibles avant que l'émail ne soit complètement formé.

## Revendications

1. - Procédé d'obtention d'une céramique à base de mâchefer d'incinération d'ordures ménagères comportant les étapes suivantes :
- on broie des matières premières minérales et des mâchefers d'incinération d'ordures ménagères ;
- on tamise ce mélange ;
- on ajoute de l'eau pour former une barbotine ;
- on transforme la barbotine en granulés ;
- on presse des granulés dans un moule pour former un tesson ;
- on cuit le tesson dans un four,
**caractérisé en ce que** la cuisson du tesson comporte
- une phase d'échauffement progressive pour permettre le dégagement gazeux des composants fusibles du tesson qui amène la température du four à une température palier comprise entre 1150°C et 1180°C avec un ralentissement de la vitesse d'échauffement entre 800° et cette température palier, l'échauffement du four entre 800°C et 1150°C dure 1 heure 15, suivi
- d'une phase de cuisson propre à la température palier, et enfin suivi
- d'une phase de refroidissement.

2. - Procédé selon la revendication 1, **caractérisé en ce que** les matières premières minérales comportent une fraction d'argile et une fraction de pegmatite.

3. - Procédé selon l'une des revendications 1 à 2, **caractérisé en ce que** les matières premières minérales comportent une fraction de feldspath, une représentation massique de la fraction de mâchefer étant inférieure à 30 %.

4. - Procédé selon l'une des revendications 1 à 3, **caractérisé en ce qu'**on vaporise une suspension aqueuse de minéraux et d'adjuvants sur une face du tesson, avant cuisson, de manière à obtenir un émail après cuisson.

5. - Procédé selon la revendication 4 **caractérisé en ce qu'**on dispose un engobe entre le tesson et l'émail pour absorber les dégagements gazeux au cours de la cuisson.

6. - Procédé selon l'une des revendications 1 à 5, **caractérisé en ce que** le mâchefer est préalablement criblé.

7. - Procédé selon l'une des revendications 1 à 6, **caractérisé en ce que** pour former le tesson
- on presse une première couche de granulés ;
- on ajoute par-dessus une deuxième couche de granulés ;
- on presse ensemble la première et la deuxième couche ;
- on réitère ces étapes jusqu'à ce que le moule du tesson soit rempli.

## Claims

1. A process for obtaining a municipal waste incineration ash-based ceramic comprising the following steps:
- the mineral raw materials and municipal waste incineration ash are ground;
- this mixture is sieved;
- water is added to form a slurry;
- the slurry is transformed into granules;
- the granules are pressed into a mold to form a piece;
- the piece is fired in an oven,
**characterized in that** firing of the piece comprises
- a progressive heating phase to allow outgassing of the fusible components of the piece that brings the oven temperature to a bearing temperature of between 1150° C and 1180° C with a leveling off of the heating rate between 800° and this bearing temperature, the heating of the oven between 800° C and 1150° C lasts 1 hour 15 minutes, followed by
- A firing phase specific to the bearing temperature, and lastly followed by
- A cooling phase.

2. The process according to claim 1, **characterized in that** the mineral raw materials comprise a clay fraction and a pegmatite fraction.

3. The process according to one of claims 1 to 2, **characterized in that** the mineral raw materials comprise a feldspar fraction, a specific representation of the ash fraction being less than 30%.

4. The process according to one of claims 1 to 3, **characterized in that** an aqueous suspension of minerals and additives is vaporized on a face of the piece, before firing, in such a way as to obtain an enamel after firing.

5. The process according to claim 4 **characterized in that** a slip coating is disposed between the piece and the enamel to absorb the off-gases during firing.

6. The process according to one of claims 1 to 5, **characterized in that** the ash is sieved beforehand.

7. The process according to one of claims 1 to 6, **characterized in that** to form the piece
- a first layer of granules is pressed;
- a second layer of granules is added on top;
- the first and second layers are pressed together;
- these steps are repeated until the piece mold is filled.

## Patentansprüche

1. Verfahren zum Erzielen einer Keramik auf der Grundlage von Hausmüllverbrennungsschlacke, das die folgenden Schritte aufweist:
- Mahlen der mineralischen Rohstoffe und der Hausmüllverbrennungsschlacken,
- Sieben dieses Gemischs,
- Hinzufügen von Wasser, um einen Schlicker zu bilden,
- Umformen des Schlickers in Granulat,
- Pressen des Granulats in eine Form, um einen Scherben zu bilden,
- Brennen des Scherbens in einem Ofen,
**dadurch gekennzeichnet, dass** das Brennen des Scherbens Folgendes aufweist:
- eine Phase des allmählichen Erhitzens, um das gasförmige Freisetzen der schmelzbaren Bestandteile des Scherbens zu erlauben, wobei diese Phase die Temperatur des Ofens auf eine Stufentemperatur zwischen 1150 °C und 1180 °C mit einem Verlangsamen der Erhitzungsgeschwindigkeit zwischen 800 °C und dieser Stufentemperatur bringt, wobei das Erhitzen des Ofens zwischen 800 °C und 1150 °C etwa 1 Stunde 15 dauert, gefolgt
- von einer eigentlichen Brennphase bei Stufentemperatur und schließlich gefolgt
- von einer Kühlphase.

2. Verfahren nach Anspruch 1, **dadurch gekennzeichnet, dass** die mineralischen Rohstoffe eine Lehmfraktion und eine Pegmatitfraktion aufweisen.

3. Verfahren nach einem der Ansprüche 1 bis 2, **dadurch gekennzeichnet, dass** die mineralischen Rohstoffe eine Feldspathfraktion aufweisen, wobei der Masseanteil der Schlackefraktion niedriger ist als 30 %.

4. Verfahren nach einem der Ansprüche 1 bis 3, **dadurch gekennzeichnet, dass** man vor dem Brennen eine wässerige Lösung von Mineralstoffen und Zusatzmittel auf eine Seite des Scherben sprüht, so dass man nach dem Brennen einen Email erzielt.

5. Verfahren nach Anspruch 4, **dadurch gekennzeichnet, dass** man zwischen dem Scherben und dem Email einen Beguss anordnet, um die gasförmigen Freisetzungen im Laufe des Brennens zu absorbieren.

6. Verfahren nach einem der Ansprüche 1 bis 5, **dadurch gekennzeichnet, dass** die Schlacke zuvor gesiebt wird.

7. Verfahren nach einem der Ansprüche 1 bis 6, **dadurch gekennzeichnet, dass** man zum Formen des Scherben
- eine erste Granulatschicht presst,
- darüber eine zweite Granulatschicht hinzufügt,
- die erste und die zweite Schicht gemeinsam presst,
- diese Schritte fortsetzt, bis die Form des Scherbens gefüllt ist.
